# EUROPÄISCHE PATENTSCHRIFT

(11) **EP 3 558 057 B1**
(45) Veröffentlichungstag und Bekanntmachung des Hinweises auf die Patenterteilung: **12.04.2023**
(21) Anmeldenummer: 17821872.3
(22) Anmeldetag: 15.12.2017
(51) Int. Cl.: A47B 3/10, A47B 43/00

(54) **TRAGBARE CAMPINGKÜCHE UND VERFAHREN ZUM AUF- UND ABBAU DER CAMPINGKÜCHE**
PORTABLE CAMPING KITCHEN AND METHOD FOR ASSEMBLING AND DISMANTLING THE CAMPING KITCHEN
CUISINE DE CAMPING PORTATIVE ET PROCÉDÉ DE MONTAGE ET DE DÉMONTAGE DE LADITE CUISINE DE CAMPING

(30) Priorität: 21.12.2016 DE 202016107218 U; 22.06.2017 AT 505182017
(43) Veröffentlichungstag der Anmeldung: 30.10.2019
(73) Patentinhaber: Steinbacher, Sascha, 5522 St.Martin/Tgb. (AT)
(72) Erfinder: Steinbacher, Sascha, 5522 St.Martin/Tgb. (AT)
(74) Vertreter: HGF
(86) Internationale Anmeldenummer: PCT/EP2017/083138
(87) Internationale Veröffentlichungsnummer: WO 2018/114712

(56) Entgegenhaltungen:
- DE-B1- 1 554 421
- DE-U- 1 793 074
- US-A- 3 915 529
- US-B2- 7 032 910
- Anonymous: "Camp Champ - DIE KÜCHE FÜR UNTERWEGS", , 3. Mai 2013 (2013-05-03), XP055450184, Gefunden im Internet: URL:http://www.campchamp.at/ [gefunden am 2018-02-12]

## Beschreibung

Die vorliegende Erfindung betrifft eine tragbare Campingküche sowie ein Verfahren zum Auf- und Abbau der solchen Campingküche.

In der DE 1 554 421 A ist eine zusammenlegbare Campingküche offenbart. Diese Campingküche umfasst einen Schrankteil mit Beinen, wobei der Schrankteil als fester tragbarer Behälter ausgebildet ist und die Beine ein Gestell ausbilden, das zum Zusammenlegen der Küche formschlüssig über dem Schrankteil aufschiebbar ist und in diesem aufgenommen wird.

Aus der DE 20 2013 007 494 U1 geht ein tragbarer Arbeits- und Freizeitkoffer mit Transportgriffen und abklappbarer Arbeitsplatte hervor. Dieser Koffer soll auch als Campingküche nutzbar sein.

In der EP 0 868 635 B1 ist eine tragbare Campingküche offenbart. Diese umfasst ein Behälterelement, in der eine Kochereinheit integral aufgenommen ist, wobei ein Paar Türen schwenkbar an der Oberseite der Kochereinheit angebracht ist, die sich aus einer geschlossenen Position in eine geöffnete Position bewegen lassen, wodurch sie zwei Arbeitsflächen ausbilden. Weiterhin ist ein zweites Paar Türen vorgesehen, mittels denen das erste Paar Türen durch Herausschwenken des zweiten Paar Türen abstützbar sein soll.

In der DE 1 554 421 B1 ist eine schrankartig ausgebildete, zusammenlegbare Campingküche offenbart. Diese umfasst einen Aufbewahrungsbehälter sowie ein damit lösbar verbundenes Untergestell. Weiterhin sind seitlich ausklappbare Abstellflächen vorgesehen. Durch Anordnen des Aufbewahrungsbehälters im Untergestell ist die Campingküche tragbar.

Aus der US 2002/0078943 A1 geht eine tragbare Campingküche hervor. Diese umfasst einen kofferartig ausgebildeten Aufbewahrungsbehälter, der auf einem separaten Fußgestell anordbar ist.

In der DE 1 793 074 U ist eine Campingküche beschrieben, die zugleich als Transportkiste und als Campingtisch verwendbar sein soll. Diese Campingküche umfasst ein kistenartiges Aufbewahrungselement, welches eine nach unten ausschwenkbare Fußkonstruktion umfasst. Weiterhin sind ausziehbare Ablegeflächen vorgesehen.

Aus der US 4,436,353 A, geht ein tragbarer, kofferartig ausgebildeter Aufbewahrungsbehälter hervor. Aus diesem Aufbewahrungsbehälter ist in vertikaler Richtung nach oben eine Regaleinrichtung mit einer darauf angeordneten Tischeinrichtung herausziehbar. Die Tischeinrichtung kann durch seitlich ausklappbare Tischflächen vergrößert werden.

In der US 3,915,529 A ist eine kompakt ausgebildete Feldküche beschrieben. Diese Feldküche umfasst ein kofferartiges Element, in dem eine Spüle, sowie ein Kocher angeordnet sind. Durch Aufklappen eines der beiden Kofferelemente werden diese zugänglich. Weiterhin wird auf diese Weise ein Regalelement ausgebildet. Zum Aufstellen der Campingküche sind ausklappbare Füße vorgesehen.

Aus der US 2006/0076861 A1 geht eine tragbare Werkbank hervor. Diese tragbare Werkbank umfasst mehrgelenkig miteinander verbundene Aufbewahrungs-, Abstell- und Arbeitsflächen.

Aufgabe der vorliegenden Erfindung ist es, eine einfach aufgebaute tragbare Campingküche, sowie ein entsprechendes Verfahren zum Auf- und Abbau bereitzustellen, die innerhalb kürzester Zeit betriebsbereit ist und robust ausgebildet ist. Weiterhin soll die Campingküche einen möglichst geringen Platzbedarf erfordern und einfach, sicher und zuverlässig im Betrieb sein.

Diese Aufgabe wird durch eine tragbare Campingküche mit den Merkmalen des unabhängigen Schutzanspruchs 1 und durch Verfahren mit den Merkmalen der unabhängigen Schutzanspruche 9 und 12 gelost. Vorteilhafte Ausgestaltungen sind in den Unteransprüchen angegeben.

Erfindungsgemäß ist eine tragbare Campingküche vorgesehen. Diese Campingküche umfasst ein Stauraumelement, das eine Vorder- und eine Rückwandung, eine Ober- und eine Unterwandung sowie zwei Seitenwandungen aufweist. Weiterhin umfasst die Campingküche ein Standelement, das einen rechteckförmigen Auflagerahmen und zwei Fußrahmen aufweist, wobei sich die Fußrahmen an zwei einander gegenüberliegenden Seiten des Auflagerahmens quer zu einer vom Auflagerahmen aufgespannten Fläche erstrecken. Das Standelement ist um eine Schwenkachse, die sich parallel zu einer zwischen Rück- und Bodenwandung des Stauraumelements ausgebildeten Kante erstreckt, derart schwenkbar mit dem Stauraumelement verbunden, dass in einer Tragestellung die Fußrahmen im Wesentlichen deckungsgleich an den Seitenwandungen des Stauraumelements angeordnet sind und in einer Arbeitsstellung die Fußrahmen die Seitenwandungen in vertikaler Richtung nach unten verlängern, wobei eine Arretiereinrichtung vorgesehen ist, um das Stauraumelement und das Standelement in ihrer Position relativ zueinander zu fixieren.

Das eine Arretiereinrichtung vorgesehen ist, um das Stauraumelement und das Standelement in ihrer Position relativ zueinander zu fixieren, bedeutet, dass die Arretiereinrichtung derart ausgebildet sein kann, dass das Standelement sowohl in der Tragestellung als auch in der Arbeitsstellung relativ zum Stauraumelement fixierbar sind.

Dass die Fußrahmen im Wesentlichen deckungsgleich an den Seitenwandungen des Stauraumelements in der Tragestellung angeordnet sind, bedeutet, dass der Auflagerahmen im Wesentlichen deckungsgleich mit der Vorderwandung des Stauraumelements angeordnet ist, sodass der Auflagerahmen in horizontaler Richtung in etwa fluchtend mit der Vorderwandung und die Fußwandungen in horizontaler Richtung in etwa fluchtend mit den Seitenwandungen angeordnet sind.

Die Rahmen des Standelements bilden in einer Arbeitsstellung eine Vorderrahmenwandung , zwei Seitenrahmenwandungen, eine Rückrahmenwandung, eine Oberrahmenwandung und eine Auflagerahmenwandung aus.

Dadurch, dass das Standelement den rechteckförmigen Auflagerahmen und die zwei Fußrahmen umfasst, die um eine Schwenkachse schwenkbar mit dem Stauraumelement verbunden sind, wird ein Standelement bereitgestellt, das zum einen einfach und sicher in der Handhabung ist und insbesondere eine sehr hohe Standfestigkeit auf verschiedenen Untergründen ermöglicht.

Auf diese Weise wird eine robuste und standfeste Campingküche, bereitgestellt, die einfach in der Handhabung und sicher und zuverlässig im Betrieb ist.

Zudem ist die zusammenklappbare Campingküche im zusammengeklappten Zustand kompakt ausgebildet und bietet dennoch einen relativ großen Stauraum.

Das Stauraumelement kann vorzugsweise quaderförmig ausgebildet sein. Ein Quader ist ein Körper, der von sechs Rechtecken begrenzt wird und der zwölf Kanten aufweist, von denen jeweils vier die gleiche Längen besitzen und zueinander parallel sind. Im Rahmen der vorliegenden Erfindung wird auch ein Körper als quaderförmig bezeichnet der von sechs Rechtecken begrenzt wird, wobei die Rechtecken abgeschrägte oder abgerundete Kanten aufweisen und nur in etwa rechteckig ausgebildet sind und wobei dann zwölf bzw. 24 Kanten vorgesehen sind, von denen jeweils vier bzw. acht in etwa gleiche Längen besitzen und zueinander in etwa parallel sind.

Weiterhin kann eine Arretiereinrichtung vorgesehen sein, um das Stauraumelement und das Standelement in ihrer Position relativ zueinander zu fixieren. Die Arretiereinrichtung kann eine erste und eine zweite Arretiereinrichtung umfassen. Die erste und die zweite Arretiereinrichtung werden nachfolgend an Hand des Ausführungsbeispiels detailliert beschrieben. Alternativ kann die Arretiereinrichtung im Bereich der Ecken zwischen Vorderwandung, Seitenwandung und Bodenwandung vorgesehen sein, um zumindest eine und vorzugsweise beide entsprechenden Ecken der Fußrahmen mit dem Stauraumelement entweder in der Tragestellung oder in der Arbeitsstellung zu verbinden.

Weiterhin kann ein bzw. können vorzugsweise zwei plattenförmige Klappelemente vorgesehen sein, die über zwei Klapparme klappbar mit den Seitenwandungen des Stauraumelement verbunden sind, wobei jeweils ein Ende der Klapparme im Bereich der Seitenwandung mit der Vorder- und mit der Rückwandung gelenkig verbunden ist und das Ausklappelement mit den anderen Enden der Schwenkarme derart gelenkig verbunden ist, dass das Ausklappelement in einer Tragestellung im Wesentlichen deckungsgleich auf der Oberwandung des Stauraums angeordnet ist und wobei das Klappelement in einer Arbeitsstellung die Oberwandung zur Seite verlängert.

Auf diese Weise ist es möglich, dass die erfindungsgemäße Campingküche eine Arbeitsfläche und eine Spülfläche bereitstellt, die in etwa der doppelten Fläche der Oberwandung des Stauraumelements entspricht. Somit bietet die Campingküche trotz ihres kompakten Aufbaus eine relativ große Arbeitsfläche.

In einem der beiden Klappelemente kann in der Arbeitsstellung ein, vorzugsweise zusammenklappbar ausgebildetes, Spülbecken lösbar befestigbar sein. In einer Tragestellung ist das Spülbecken im Stauraumelement anordbar.

In der Arbeitsstellung kann auf der Oberwandung des Stauraumelements benachbart zum Spülbecken ein Wasserhahn lösbar befestigbar sein, wobei der Wasserhahn in einer Tragestellung ebenfalls im Stauraumelement oder auf der Oberwandung anordbar ist.

Auf diese Weise wird eine voll funktionsfähige Spüle bereitgestellt, da der Wasserhahn entweder mit einem Wasseranschluss an einem Campingplatz, einem Yachthafen, einem herkömmlichen Wasseranschluss für den Garten oder dergleichen verbindbar ist.

Weiterhin kann das Spülbecken eine geschlossene bzw. dichte Muldenform aufweisen oder aber auch mit einem wieder verschließbaren Ablauf versehen sein, an dem ein entsprechender Ablaufschlauch zum Abführen von im Spülbecken vorhandenen Schmutzwasser anschließbar ist. Alternativ kann das Spülbecken auch einfach aus dem Klappelement entnommen werden und in dafür geeigneten Bereichen entleert werden.

Im Stauraumelement kann ein Kochelement vorgesehen sein, dass im Wesentlichen flächenbündig mit der Oberwandung des Stauraumelements angeordnet ist. Als Kochelement kann vorzugsweise ein zweiflammiger oder mehrflammiger Gaskocher vorgesehen sein. Die Kochfelder eines solchen Gaskochers sind dann in etwa flächenbündig mit der Oberwandung des Stauraumelements ausgebildet, wobei eine entsprechende Gasflasche entweder mittels einer entsprechenden Fixiereinrichtung im Stauraumelement sicher fixierbar ist oder ein externer Anschluss vorgesehen ist, um das Kochfeld mit einer externen Gasflasche zu verbinden.

Gemäß einem, jedoch nicht bevorzugten Ausführungsbeispiel können die Vorder- und/oder Rückwandung, die Ober- und/oder Unterwandung sowie die zwei Seitenwandungen auch rahmenförmig ausgebildet sein. Auch solche Rahmen werden im Rahmen der vorliegenden Erfindung als Wandungen bezeichnet. Gleiches gilt für die Wandungen, die auch als Rahmen ausgebildet sein können.

Die Rahmen können aus Alu-, Stahl-, Edelstahl-, Holz-, Carbon oder Kunststoffprofilen ausgebildet sein.

Die Wandungen können aus Alu-, Stahl-, Edelstahl-, Holz-, Carbon oder Kunststoffplatten ausgebildet sein.

Dadurch, dass das Stauraumelement durch Wandungen begrenzt ist, kann das Stauraumelement sowohl in der Tragestellung als auch in der Arbeitsstellung als Aufbewahrungsraum genutzt werden und verringert so den Platzbedarf der Campingküche.

Gemäß einem Verfahren zum Ausschwenken des Standelements vom Stauraumelement bzw. einem Überführen der Campingküche von einer Tragestellung in eine Arbeitsstellung wird die Campingküche auf die Unterwandung des Stauraumelements gelegt. Anschließend wird die erste Arretiereinrichtung zwischen Stauraumelement und Standelement im Bereich der Oberwandung gelöst und das Stauraumelement in vertikaler Richtung nach oben angehoben. Auf diese Weise schwenkt das Standelement um die Schwenkachse. Die horizontale Ausrichtung des Stauraumelements bleibt während des gesamten Ausschwenkens der Campingküche erhalten. Sobald eine Auflagefläche des Standelements auf einem Untergrund vollflächig aufliegt und die Oberwandung horizontal ausgerichtet ist wird die Arbeitsstellung mittels der zweiten Arretiereinrichtung fixiert. Anschließend könne Standfüße des Standelement eingestellt werden, so dass die Campingküche bzw. das Standelement fest auf dem Boden steht. Gemäß einem Verfahren zum Einschwenken des Standelements zum Stauraumelement bzw. einem Überführen der Campingküche von der Arbeitsstellung in die Tragestellung wird zunächst die zweite Arretiereinrichtung im Bereich der Unterwandung zwischen Stauraumelement und Standelement gelöst und das Stauraumelement in vertikaler Richtung nach unten abgesenkt. Auf diese Weise schwenkt das Standelement um die Schwenkachse. Die horizontale Ausrichtung des Stauraumelements bleibt während des gesamten Einschwenkens der Campingküche erhalten. Sobald die Bodenwandung des Stauraumelements auf dem Untergrund vollflächig aufliegt und der Auflagerahmen des Standelements parallel zur Vorderwandung des Stauraumelements angeordnet ist wird die Tragestellung mittels der zweiten Arretiereinrichtung fixiert.

Zum Überführen der Campingküche von der Tragestellung in die Arbeitsstellung und umgekehrt ist ein Griff vorgesehen.

Zum Transport kann die sich in der Tragestellung befindliche Küche an den Fußrahmen gegriffen werden.

Dadurch, dass die horizontale Ausrichtung des Stauraumelements sowohl während des Ausals auch während des Einschwenkens erhalten bleibt fallen im Stauraumelement angeordnete Gegenstände nicht um bzw. durcheinander.

Zum Ausklappen eines Klappelementes wird dieses seitlicher Richtung derart nach außen derart geschwenkt, dass ein Klappen des Klappelements um eine weitere Klappachse um 180° erfolgt. Die Klappachse erstreckt sich durch die gelenkige Verbindung der Klapparme mit dem Klappelement. Eine der der mit den Klapparmen verbundenen Kante gegenüberliegende Kante des Klappelements liegt im Bereich der entsprechenden Seitenwandung auf der Oberwandung auf. Die Klapparme drehen sich dabei um eine Drehachse. Die Abstützung des Klappelements in vertikaler Richtung erfolgt durch die Klapparme und die Oberwandung. Zum Fixieren des Klappelements in horizontaler Richtung sind vorzugsweise zwei federbeaufschlagte Fixierzapfen vorgesehen, die im Bereich zwischen Oberwandung und Klappelement angeordnet sind. Auf diese Weise wird eine stabile Auflagefläche bereitgestellt.

Beim Einklappen wird ein Klappelement in vertikaler Richtung nach oben derart angehoben, dass ein Klappen des Klappelements um die Klappachse um 180° erfolgt. Die Klapparme drehen sich dabei um die Drehachse. Die Klappelemente liegen dann in etwa flächenbündig auf und parallel zur Oberwandung auf dieser auf. Die Klappelemente werden dann mittels der federbeaufschlagten Fixierzapfen (nicht dargestellt) fixiert.

Die Erfindung wird im Folgenden anhand der Figuren näher beschrieben. Diese zeigen in:
- Figur 1: eine perspektivische Darstellung einer erfindungsgemäßen Campingküche in einer Arbeitsstellung,
- Figur 2: eine perspektivische Darstellung der erfindungsgemäßen Campingküche beim Überführen von der Arbeitsstellung in eine Tragestellung,
- Figur 3: eine weitere perspektivische Darstellung der erfindungsgemäßen Campingküche beim Überführen von der Arbeitsstellung in die Tragestellung, und
- Figur 4: eine perspektivische Darstellung der erfindungsgemäßen Campingküche in der Tragestellung.

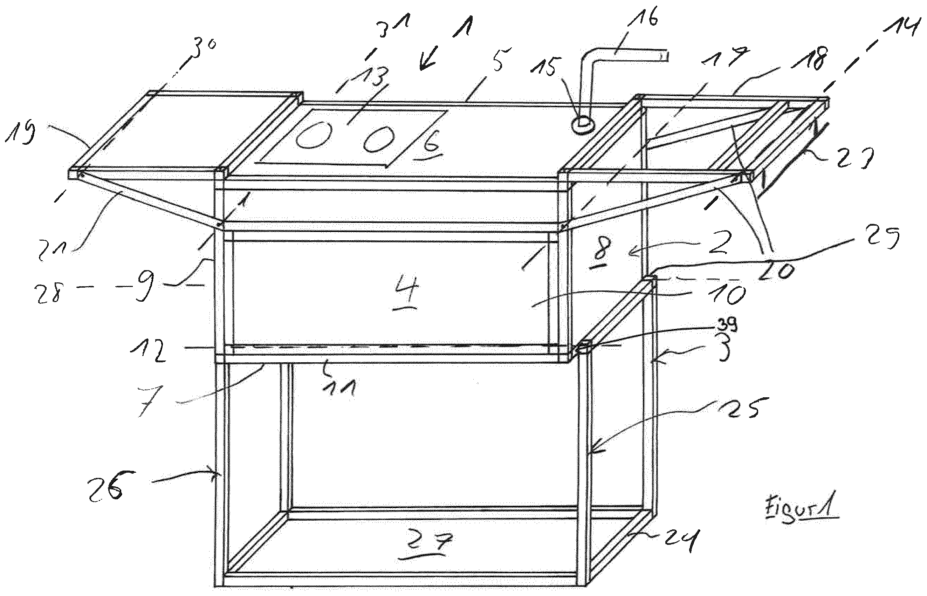

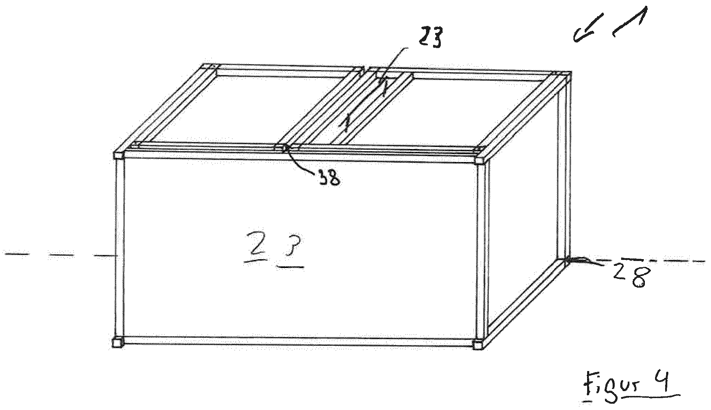

Im Folgenden wird eine erfindungsgemäße Campingküche an Hand eines Ausführungsbeispiels beschrieben (Figuren 1 bis 4).

Die Campingküche 1 weist ein quaderförmiges Stauraumelement 2 und ein Standelement 3 auf.

Das Stauraumelement 3 umfasst eine Vorder- und eine Rückwandung 4, 5, eine Ober- und eine Unterwandung 6, 7 sowie zwei Seitenwandungen 8, 9.

In der Vorderwandung 4 ist eine sich über die gesamte Breite der Vorderwandung erstreckende Klappe 10 ausgebildet. Die Klappe 10 ist um eine, sich parallel zu einer zwischen Vorder- und Unterwandung ausgebildeten Kante 11, Klappachse 12 mittels Scharnieren (nicht dargestellt) klappbar.

In der Oberwandung 6 ist eine Ausnehmung (nicht dargestellt) ausgebildet, in der ein beispielsweise zweiflammiges Gaskochfeld 13 integriert ist. Das Kochfeld 13 ist derart in die Oberwandung 6 integriert, dass eine zur Abdeckung der Gaskochfelder vorgesehene Abdeckplatte in etwa flächenbündig mit der Oberwandung 6 abschließt.

Seitlich neben dem Kochfeld 13 ist eine weitere Ausnehmung 15 vorgesehen, in der ein Wasserhahn 16 anordbar ist. Der Wasserhahn 16 ist in der Ausnehmung 15, beispielsweise mittels eines Click-Mechanismus oder durch Einschrauben, lösbar befestigt. Weiterhin weist der Wasserhahn 16 einen Anschluss (nicht dargestellt) zum Verbinden mit einer internen Wasserversorgung, wie z.B. einem Wasserkanister oder einer externen Wasserversorgung, wie z.B. einem Wasseranschluss auf. Der Wasserhahn 16 kann in der Tragestellung im Stauraumelement anordbar sein. Alternativ kann der Click-Mechanismus auch derart ausgebildet sein dass der Wasserhahn in Richtung Oberwandung umgeklappt wird und auf dieser in der Tragestellung verbleibt.

Im Bereich der beiden Seitenwandungen 8, 9 sind Klappelemente 18, 19 vorgesehen.

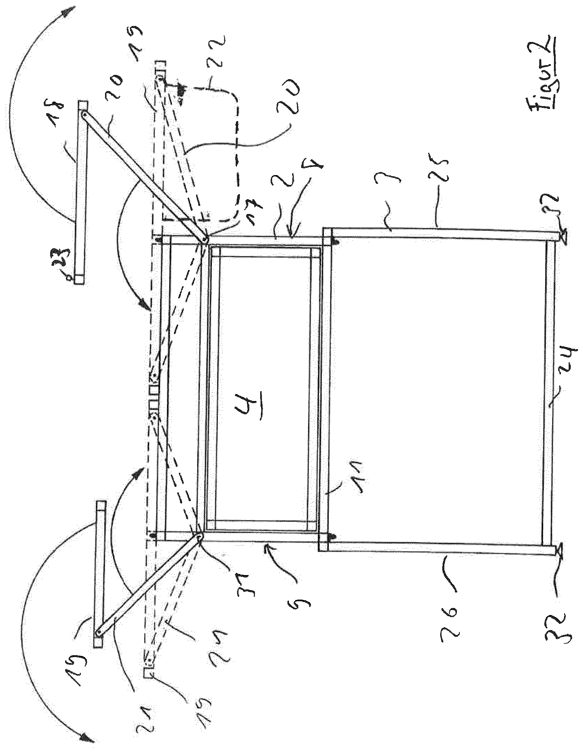

Das erste rahmenartig ausgebildete Klappelement 18 ist über zwei Klapparme 20 klappbar mit dem Stauraumelement 2 verbunden (Figur 2). Jeweils ein Ende der Klapparme 20 ist im Bereich der Seitenwandung 8 mit der Vorder- und mit der Rückwandung 4, 5 gelenkig verbunden. Das Klappelement 18 ist mit den anderen Enden der Klapparme 20 derart gelenkig verbunden, dass das Klappelement 18 in einer Tragestellung im Wesentlichen deckungsgleich auf der Oberwandung 6 des Stauraumelements 2 angeordnet ist und ggfs. den Wasserhahn 16 umgibt. In einer Arbeitsstellung verlängert das Klappelement 18 die Oberwandung 6 zur Seite hin.

Das zweite plattenförmige Klappelement 19 ist ebenfalls über zwei Klapparme 21 klappbar mit dem Stauraumelement 2 verbunden. Jeweils ein Ende der Klapparme 21 ist im Bereich der Seitenwandung 9 mit der Vorder- und mit der Rückwandung 4, 5 gelenkig verbunden. Das Klappelement 19 ist mit den anderen Enden der Klapparme 21 derart gelenkig verbunden, dass das Klappelement 19 in einer Tragestellung im Wesentlichen deckungsgleich auf der Oberwandung 6 des Stauraumelements 2 angeordnet ist. In einer Arbeitsstellung verlängert das Klappelement 19 die Oberwandung 6 zur Seite hin.

Im ersten plattenförmigen Klappelement 18 ist ein Spülbecken 22 anordbar (Figur 2). Vorzugsweise wird das Spülbecken 22 in das rahmenförmige erste Klappelement 20 einfach eingesetzt. Es können aber auch entsprechende Befestigungsmittel zum Fixieren des Spülbeckens 22 im Klappelement 18 vorgesehen sein.

Das plattenförmige Klappelement 19 bildet eine Arbeitsplatte bzw. eine Verlängerung der Oberwandung 6 aus.

Im Folgenden wird der Klappmechanismus der beiden Klappelemente 18, 19 beschrieben (Figuren 1 und 2).

In der Tragestellung liegt das Klappelement 18 in etwa ebenflächig auf der Oberwandung 6 derart auf, dass eine mit den Klapparmen 20 verbundene Kante des plattenförmigen Klappelements 18 in etwa mittig im Bereich der Oberwandung 6 aufliegt.

An dieser Kante ist ein in der Tragestellung in vertikaler Richtung nach oben weisender Griff 23 vorgesehen.

Zum Ausklappen des rahmenartig ausgebildeten Klappelements wird das Klappelement 18 in seitlicher Richtung derart nach außen geschwenkt, dass ein Klappen des Klappelements 18 um eine weitere Klappachse 14 um 180° erfolgt. Die Klappachse 14 erstreckt sich durch die gelenkige Verbindung der Klapparme 20 mit dem Klappelement 18. Eine der der mit den Klapparmen 20 verbundenen Kante gegenüberliegende Kante des Klappelements 18 liegt im Bereich der entsprechenden Seitenwandung 8 auf der Oberwandung 6 auf. Die Klapparme 20 drehen sich dabei um eine Drehachse 17. Die Abstützung des Klappelements 18 in vertikaler Richtung erfolgt durch die Klapparme 20 und die Oberwandung 6. Zum Fixieren des Klappelements 18 in horizontaler Richtung sind vorzugsweise zwei federbeaufschlagte Fixierzapfen (nicht dargestellt) vorgesehen, die im Bereich zwischen Oberwandung 6 und Klappelement 18 angeordnet sind. Auf diese Weise wird eine stabile Auflagefläche bereitgestellt.

Zum Ausklappen des plattenförmigen Klappelements wird das Klappelement 19 in seitlicher Richtung derart nach außen geschwenkt, dass ein Klappen des Klappelements 19 um eine weitere Klappachse 30 um 180° erfolgt. Die Klappachse 30 erstreckt sich durch die gelenkige Verbindung der Klapparme 21 mit dem Klappelement 19. Eine der der mit den Klapparmen 21 verbundenen Kante gegenüberliegende Kante des Klappelements 19 liegt im Bereich der entsprechenden Seitenwandung 9 auf der Oberwandung 6 auf. Die Klapparme 21 drehen sich dabei um eine Drehachse 31. Die Abstützung des Klappelements 19 in vertikaler Richtung erfolgt durch die Klapparme 21 und die Oberwandung 6. Zum Fixieren des Klappelements 19 in horizontaler Richtung sind vorzugsweise zwei federbeaufschlagte Fixierzapfen (nicht dargestellt) vorgesehen, die im Bereich zwischen Oberwandung 6 und Klappelement 19 angeordnet sind.

Beim Einklappen der Klappelemente 18, 19 wird ein entsprechendes Klappelement 18, 19 in vertikaler Richtung nach oben derart angehoben, dass ein Klappen des Klappelements 18, 19 um die Klappachse 14, 30 um 180° erfolgt. Die Klapparme 20, 21 drehen sich dabei um die Drehachse 17, 31. Die Klappelemente 18, 19 liegen dann in etwa flächenbündig auf und parallel zur Oberwandung 6 auf dieser auf. Die Klappelemente 18, 19 werden dann mittels der federbeaufschlagten Fixierzapfen (nicht dargestellt) fixiert.

Zum Fixieren der Klapparme in der Tragestellung ist sind die Fixierzapfen (nicht dargestellt) vorgesehen. Die Fixierzapfen sind in Eckbereichen der Oberwandung angeordnet und bspw. als sich in vertikaler Richtung erstreckende zylinderförmige Stifte ausgebildet. Die Klappelemente 18, 19 weisen korrespondierend angeordnete Fixierelemente auf.

Im Folgenden wird das Standelement 3 der Campingküche 1 beschrieben (Figur 1). Das Standelement weist einen rechteckförmigen Auflagerahmen 24 und zwei Fußrahmen 25, 26 auf. Die Fußrahmen 25, 26 erstrecken sich an zwei einander gegenüberliegenden Seiten des Auflagerahmens 24 quer zu einer vom Auflagerahmen aufgespannten Fläche 27.

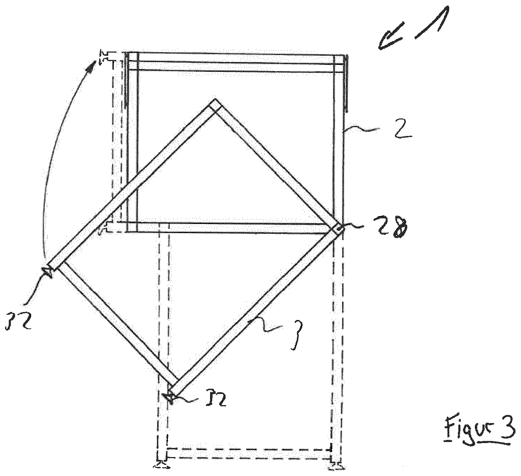

Das Standelement 3 ist um eine Schwenkachse 28, die sich parallel zu einer zwischen Rück- und Bodenwandung 5, 7 des Stauraumelements 2 ausgebildeten Kante 29 erstreckt, derart schwenkbar mit dem Stauraumelement 2 verbunden, dass in einer Tragestellung die Fußrahmen 25, 26 im Wesentlichen deckungsgleich an den Seitenwandungen des Stauraumelements angeordnet sind und in einer Arbeitsstellung die Fußrahmen 25, 26 die Seitenwandungen 8, 9 in vertikaler Richtung nach unten verlängern (Figur 3).

Die Rahmen 24, 25, 26 des Standelements 3 bilden in einer Arbeitsstellung eine Vorderrahmenwandung 33, zwei Seitenrahmenwandungen 34, 35, eine Rückrahmenwandung 36, eine Oberrahmenwandung und eine Auflagerahmenwandung 37 aus.

Weiterhin ist eine Arretiereinrichtung vorgesehen, um das Stauraumelement 2 und das Standelement 3 in ihrer Position relativ zueinander zu fixieren. Die Arretiereinrichtung umfasst eine erste und eine zweite Arretiereinrichtung 38, 39.

Die erste Arretiereinrichtung 38 fixiert das Standelement 3 und das Stauraumelement 2 in der Tragestellung relativ zueinander. Diese erste Arretiereinrichtung 38 umfasst zwei Drehriegel, die in etwa mittig an einer Strebe des Auflagerahmens derart angeordnet sind, dass sie um, auf der Vorderrahmenwandung 33 des Standelements 3 senkrecht stehende, Drehachsen drehbar sind. In der Tragestellung fixieren die Drehriegel der ersten Arretiereinrichtung 38 das Standelement 3 bzgl. des Stauraumelements 2 derart, dass die Drehriegel auf der Oberwandung 6 des Stauraumelements 2 bzw. auf den Klappelementen 18, 19 aufliegen und ein Ausschwenken des Standelements 2 verhindern.

Die zweite Arretiereinrichtung 39 fixiert das Standelement 3 und das Stauraumelement 2 in der Arbeitsstellung relativ zueinander. Diese zweite Arretiereinrichtung 39 umfasst zwei Drehriegel, die an jeweils einer Strebe der Fußrahmen 25, 26 derart angeordnet sind, dass sie um, auf der Oberrahmenwandung des Standelements 3 senkrecht stehende, Drehachsen drehbar sind. In der Arbeitsstellung fixieren die Drehriegel der zweiten Arretiereinrichtung 38 das Standelement 3 bzgl. des Stauraumelements 2 derart, dass die Bodenwandung 7 des Stauraumelements 2 auf den Drehriegeln aufliegt und ein Einschwenken des Standelements 2 verhindern.

Die Arretiereinrichtung kann alternativ auch einen federbeaufschlagten Stift umfassen, der unterseitig an der Bodenwandung 7 des Stauraumelements 3 angeordnet ist und in entsprechende, in den Fußrahmen 25, 26 ausgebildete Ausnehmungen eingreift, um das Standelement 3 relativ zum Stauraumelement 2 zu fixieren.

Im Bereich der Ecken des Standelements 3 sind in vertikaler Richtung nach unten weisende Standfüße 32 angeordnet. Die Standfüße 32 weisen Gewindestangen auf, die in Eingriff mit im Auflagerahmen 24 ausgebildeten Gewinden stehen. Auf diese Weise sind die einzelne Standfüße 32 jeweils in vertikaler Richtung unabhängig voneinander einstellbar. Somit ist es möglich die Campingküche auch auf unebenen Flächen waagerecht auszurichten.

Im Bereich des Auflagerahmens kann eine weitere Ablageplatte (nicht dargestellt) zum Aufnehmen von Gegenständen vorgesehen sein.

Das Spülbecken ist vorzugsweise zusammenklappbar ausgebildet, so dass es beim Verstauen im Stauraumelement möglichst wenig Platz benötigt.

Im Folgenden wird ein Ausschwenken des Standelements 3 vom Stauraumelement 2 bzw. ein Überführen der Campingküche von einer Tragestellung in eine Arbeitsstellung beschrieben (Figuren 1 bis 4).

Zunächst wird die komplette Campingküche auf die Bodenwandung 7 des Stauraumelements 2 gelegt. Anschließend wird die erste Arretiereinrichtung 38 im Bereich der Oberwandung 6 durch drehen der Drehriegel um 90° gelöst und das Stauraumelement 2 in vertikaler Richtung nach oben angehoben. Auf diese Weise schwenkt das Standelement 3 um die, im Bereich der Kante 29 ausgebildete, Schwenkachse 28. Sobald die Auflagefläche 27 des Standelements 3 auf dem Untergrund vollflächig aufliegt und die Oberwandung 6 ebenfalls horizontal ausgerichtet ist wird die Arbeitsstellung mittels der zweiten Arretiereinrichtung 39 durch drehen der Drehriegel um 90° fixiert. Anschließend werden die Standfüße 32 eingestellt, so dass die Campingküche bzw. das Standelement 3 fest auf dem Boden steht.

Im Folgenden wird ein Einschwenken des Standelements 3 zum Stauraumelement 2 bzw. ein Überführen der Campingküche von der Arbeitsstellung in die Tragestellung beschrieben.

Zunächst wird die zweite Arretiereinrichtung 39 im Bereich der Bodenwandung 7 durch drehen der Drehriegel um 90° gelöst und das Stauraumelement 2 in vertikaler Richtung nach unten abgesenkt. Auf diese Weise schwenkt das Standelement 3 um die, im Bereich der Kante 29 ausgebildete, Schwenkachse 28. Sobald die Bodenwandung 6 des Stauraumelements 2 auf dem Untergrund vollflächig aufliegt und der Auflagerahmen 24 des Standelements 3 parallel zur Vorderwandung 4 des Stauraumelements 2 angeordnet ist wird die Tragestellung mittels der ersten Arretiereinrichtung durch drehen der Drehriegel um 90° fixiert. Dann kann die Küche am Griff 23 angehoben und von einem Benutzer getragen bzw. transportiert werden.

Die Klappelemente werden beim Aufstellen und beim zusammenklappen entsprechend, wie vorstehend erläutert betätigt.

Die Campingküche 1 bzw. deren Stauraum- und Standelement 2, 3 sind vorzugsweise aus miteinander verbundenen Profilstangen aus Metall, vorzugsweise Aluminium, mit quadratischen Querschnitt ausgebildet.

Die Verfahren zum Überführen einer Campingküche von einer Tragestellung in eine Arbeitsstellung und umgekehrt sowie die Verfahren zum Ein- Ausklappen eines Klappelementes der Campingküche lassen sich wie folgt zusammenfassen.

Verfahren zum Überführen einer solchen Campingküche von einer Tragestellung in eine Arbeitsstellung und somit zum Ausschwenken eines Standelements von einem Stauraumelement umfassend die folgenden Schritte:
Anordnen der Campingküche auf einer Bodenwandung des Stauraumelements und entsprechend auf einer Rückrahmenwandung des Standelements,
Lösen einer ersten Arretiereinrichtung zwischen Standelement und Stauraumelement,
Anheben des Stauraumelements in vertikaler Richtung nach oben derart, dass das Standelement um eine Schwenkachse in vertikaler Richtung nach unten schwenkt,
Aufliegen eines Auflagerahmens bzw. der Bodenrahmenwandung des Standelements auf einem Untergrund, und
Horizontales Ausrichten einer Oberwandung des Stauraumelements,
Fixieren der Arbeitsstellung zwischen Standelement und Stauraumelement mittels der zweiten Arretiereinrichtung, und
optionales Einstellen der Standfüße derart, dass das Standelement lagestabil auf einem Untergrund aufliegt.

Verfahren zum Überführen einer solchen Campingküche von einer Arbeitsstellung in eine Tragestellung und somit zum Einschwenken eines Standelements zum Stauraumelement umfassend die folgenden Schritte:
Anordnen der Campingküche auf einem Auflagerahmens bzw. der Bodenrahmenwandung des Standelements,
Lösen einer zweiten Arretiereinrichtung zwischen Standelement und Stauraumelement, Absenken des Stauraumelements in vertikaler Richtung nach unten derart, dass das Standelement um eine Schwenkachse in vertikaler Richtung nach oben schwenkt,
Aufliegen einer Bodenwandung des Stauraumelements und eines Auflagerahmens bzw. der Bodenrahmenwandung des Standelements auf einem Untergrund, so dass der Auflagerahmen des Standelements parallel zu einer Vorderwandung des Stauraumelements angeordnet ist, und
Fixieren der Tragestellung mittels der ersten Arretiereinrichtung.

Verfahren zum Ausklappen eines Klappelementes einer solchen Campingküche umfassend die folgenden Schritte:
Schwenken des Klappelements in seitlicher Richtung derart nach außen, dass ein Klappen des Klappelements um eine weitere Klappachse um 180° erfolgt, wobei sich. die Klappachse durch eine gelenkige Verbindung der Klapparme mit dem Klappelement erstreckt,
Aufliegen einer, der mit den Klapparmen verbundenen Kante gegenüberliegenden Kante des Klappelements im Bereich einer entsprechenden Seitenwandung der Oberwandung auf, wobei sich die Klapparme drehen dabei um eine Drehachse drehen,
Abstützen des Klappelements in vertikaler Richtung durch die Klapparme und die Oberwandung, und
Fixieren des Klappelements in horizontaler Richtung mittels einer entsprechenden Fixiereinrichtung.

Verfahren zum Einklappen eines Klappelementes einer solchen Campingküche umfassend die folgenden Schritte:
Anheben eines Klappelement in vertikaler Richtung nach oben derart, dass ein Klappen des Klappelements um eine Klappachse um 180° erfolgt, und
Drehen der Klapparme drehen um die Drehachse,
in etwa flächenbündiges Aufliegen der Klappelemente auf einer Oberwandung, und Fixieren des Klappelements mittels einer entsprechenden Fixiereinrichtung.

### Bezugszeichenliste

- 1: Campingküche
- 2: Stauraumelement
- 3: Standelement
- 4: Vorderwandung
- 5: Rückwandung
- 6: Oberwandung
- 7: Bodenwandung
- 8: Seitenwandung
- 9: Seitenwandung
- 10: Klappe
- 11: Kante
- 12: Klappachse
- 13: Kochfeld
- 14: Klappachse
- 15: Ausnehmung
- 16: Wasserhahn
- 17: Drehachse
- 18: rahmenförmiges Klappelement
- 19: plattenförmiges Klappelement
- 20: Klapparm
- 21: Klapparm
- 22: Spülbecken
- 23: Griff
- 24: Auflagerahmen
- 25: Fußrahmen
- 26: Fußrahmen
- 27: Fläche
- 28: Schwenkachse
- 29: Kante
- 30: Klappachse
- 31: Drehachse
- 32: Standfüße
- 33: Vorderrahmenwandung
- 34: Seitenrahmenwandung
- 35: Seitenrahmenwandung
- 36: Rückrahmenwandung
- 37: Auflagerahmenwandung
- 38: erste Arretiereinrichtung
- 39: zweite Arretiereinrichtung
- 40: Oberrahmenwandung

## Patentansprüche

1. Tragbare Campingküche, umfassend
ein Stauraumelement (2), das eine Vorder- (4) und eine Rückwandung (5), eine Ober- (6) und eine Unterwandung (7) sowie zwei Seitenwandungen (8, 9) aufweist, ein Standelement (3), das einen rechteckförmigen Auflagerahmen (24) und zwei Fußrahmen (25, 26) aufweist, wobei sich die Fußrahmen (25, 26) an zwei einander gegenüberliegenden Seiten des Auflagerahmens (24) quer zu einer vom Auflagerahmen (24) aufgespannten Fläche erstrecken, und wobei das Standelement (3) um eine Schwenkachse (28), die sich parallel zu einer zwischen Rück- und Bodenwandung (7) des Stauraumelements (2) ausgebildeten Kante erstreckt, derart schwenkbar mit dem Stauraumelement (2) verbunden ist, dass
in einer Tragestellung die Fußrahmen (25, 26) im Wesentlichen deckungsgleich an den Seitenwandungen (8, 9) des Stauraumelements (2) angeordnet sind, und in einer Arbeitsstellung die Fußrahmen (25, 26) die Seitenwandungen (8, 9) in vertikaler Richtung nach unten verlängern,
wobei eine Arretiereinrichtung (38, 39) vorgesehen ist, um das Stauraumelement (2) und das Standelement (3) in ihrer Position relativ zueinander zu fixieren.

2. Campingküche gemäß Anspruch 1,
**dadurch gekennzeichnet,**
**dass** das Stauraumelement (2) quaderförmig ausgebildet ist.

3. Campingküche gemäß Anspruch 1 oder 2,
**dadurch gekennzeichnet,**
**dass** ein erstes rahmenartig ausgebildetes Klappelement (18) vorgesehen ist, das über zwei Klapparme (20, 21) klappbar mit dem Stauraumelement (2) verbunden ist, wobei jeweils ein Ende der Klapparme (20, 21) im Bereich der Seitenwandung (8, 9) mit der Vorder- (4) und mit der Rückwandung (5) gelenkig verbunden ist und das Ausklappelement (18) mit den anderen Enden der Schwenkarme derart gelenkig verbunden ist, dass das Ausklappelement (18) in einer Tragestellung im Wesentlichen deckungsgleich auf der Oberwandung (6) des Stauraumelements (2) angeordnet ist und wobei das Klappelement (18) in einer Arbeitsstellung die Oberwandung (6) zur Seite hin verlängert
und/oder
ein zweites plattenförmiges Klappelement (19) vorgesehen ist, das über zwei Klapparme (20, 21) klappbar mit dem Stauraumelement (2) verbunden ist, wobei jeweils ein Ende der Klapparme (20, 21) im Bereich der Seitenwandung (8, 9) mit der Vorder- (4) und mit der Rückwandung (5) gelenkig verbunden ist und das Ausklappelement (19) mit den anderen Enden der Schwenkarme derart gelenkig verbunden ist, dass das Ausklappelement (19) in einer Tragestellung im Wesentlichen deckungsgleich auf der Oberwandung (6) des Stauraumelements (2) angeordnet ist und wobei das Klappelement (19) in einer Arbeitsstellung die Oberwandung (6) zur Seite hin verlängert.

4. Campingküche gemäß einem der Ansprüche 1 bis 3,
**dadurch gekennzeichnet,**
**dass** in dem rahmenartig ausgebildeten Klappelement (19) in der Arbeitsstellung ein Spülbecken (22) lösbar befestigbar ist, wobei das Spülbecken (22) in einer Tragestellung im Stauraumelement (2) anordbar ist
und/oder
im Stauraumelement (2) ein Kochelement (13) vorgesehen ist, das im Wesentlichen flächenbündig mit der Oberwandung (6) des Stauraumelements (2) angeordnet ist und/oder
in der Arbeitsstellung auf der Oberwandung (6) des Stauraumelements (2) benachbart zum Spülbecken (22) ein Wasserhahn (16) lösbar befestigbar ist, wobei der Wasserhahn (16) in einer Tragestellung im Stauraumelement (2) oder auf der Oberwandung (6) anordbar ist
und/oder
das Spülbecken (22) zusammenklappbar ausgebildet ist.

5. Campingküche gemäß einem der Ansprüche 1 bis 4,
**dadurch gekennzeichnet,**
**dass** die Rahmen aus Alu-, Stahl-, Edelstahl-, Holz-, Carbon- oder Kunststoffprofilen ausgebildet sind
und/oder
**dass** die Wandungen aus Alu-, Stahl-, Edelstahl-, Holz-, Carbon- oder Kunststoffplatten ausgebildet sind.

6. Campingküche gemäß einem der Ansprüche 1 bis 5,
**dadurch gekennzeichnet,**
**dass** die Arretier-einrichtung (38, 39) vorzugsweise eine erste (38) und eine zweite (39) Arretiereinrichtung umfasst.

7. Campingküche gemäß Anspruch 6,
**dadurch gekennzeichnet,**
**dass** die erste Arretiereinrichtung (38) das Standelement (3) und das Stauraumelement (2) in der Tragestellung relativ zueinander fixiert, wobei diese erste Arretiereinrichtung (38) zwei Drehriegel umfasst, die in etwa mittig an einer Strebe des Auflagerahmens (24) derart angeordnet sind, dass sie um, auf einer Vorderrahmenwandung des Standelements (3) senkrecht stehende, Drehachsen (31) drehbar sind und die Drehriegel der ersten Arretiereinrichtung (38) das Standelement (3) bzgl. des Stauraumelements (2) in der Tragestellung derart fixieren, dass die Drehriegel auf der Oberwandung (6) des Stauraumelements (2) bzw. auf den Klappelementen (19) aufliegen und ein Ausschwenken des Standelements (3) verhindern.

8. Campingküche gemäß Anspruch 6 oder 7,
**dadurch gekennzeichnet,**
**dass** die zweite Arretiereinrichtung (39) das Standelement (3) und das Stauraumelement (2) in der Arbeitsstellung relativ zueinander fixiert, wobei diese zweite Arretiereinrichtung (39) zwei Drehriegel umfasst, die an jeweils einer Strebe der Fußrahmen (25, 26) derart angeordnet sind, dass sie um, auf einer Oberrahmenwandung des Standelements (3) senkrecht stehende, Drehachsen (31) drehbar sind und die Drehriegel der zweiten Arretiereinrichtung (39) das Standelement (3) bzgl. des Stauraumelements (2) in der Arbeitsstellung derart fixieren, dass die Bodenwandung (7) des Stauraumelements (2) auf den Drehriegeln aufliegt und ein Einschwenken des Standelements (3) verhindern.

9. Verfahren zum Überführen einer Campingküche gemäß einer der Ansprüche 1-8 von einer Tragestellung in eine Arbeitsstellung und somit zum Ausschwenken eines Standelements (3) von einem Stauraumelement (2) umfassend die folgenden Schritte:
Anordnen der Campingküche auf einem Auflagerahmen (24) bzw. der Bodenrahmenwandung des Standelements (3),
Lösen einer ersten Arretiereinrichtung (38) zwischen Standelement (3) und Stauraumelement (2),
Anheben des Stauraumelements (2) in vertikaler Richtung nach oben derart, dass das Standelement (3) um eine Schwenkachse (28) in vertikaler Richtung nach unten schwenkt,
Aufliegen einer Auflagefläche des Stauraumelements (2) auf einem Untergrund, horizontales Ausrichten der Oberwandung(6) , und
Fixieren der Arbeitsstellung mittels einer zweiten Arretiereinrichtung (39).

10. Verfahren gemäß Anspruch 9,
**dadurch gekennzeichnet,**
**dass** ein Einstellen der Standfüße derart erfolgt, dass das Standelement (3) lagestabil auf einem Untergrund aufliegt.

11. Verfahren gemäß Anspruch 9, umfassend die folgenden Schritte:
Schwenken des Klappelements (19) in seitlicher Richtung derart nach außen, dass ein Klappen des Klappelements (19) um eine weitere Klappachse um 180° erfolgt, wobei sich. die Klappachse durch eine gelenkige Verbindung der Klapparme (20, 21) mit dem Klappelement (19) erstreckt,
Aufliegen einer, der mit den Klapparmen (20, 21) verbundenen Kante gegenüberliegenden Kante des Klappelements (19) im Bereich einer entsprechenden Seitenwandung (8, 9) der Oberwandung (6) auf, wobei sich die Klapparme (20, 21) drehen dabei um eine Drehachse (31) drehen,
Abstützen des Klappelements (19) in vertikaler Richtung durch die Klapparme (20, 21) und die Oberwandung (6)
und/oder
ein Fixieren des Klappelements (19) in horizontaler Richtung mittels einer entsprechenden Fixiereinrichtung erfolgt.

12. Verfahren zum Überführen einer Campingküche gemäß einer der Ansprüche 1-8 von einer Arbeitsstellung in eine Tragestellung und somit zum Einschwenken eines Standelements (3) zum Stauraumelement (2) umfassend die folgenden Schritte:
Anordnen der Campingküche auf einem Auflagerahmen (24) bzw. der Bodenrahmenwandung des Standelements (3),
Lösen einer zweiten Arretiereinrichtung (39) zwischen Standelement (3) und Stauraumelement (2),
Absenken des Stauraumelements (2) in vertikaler Richtung nach unten derart, dass das Standelement (3) um eine Schwenkachse (28) in vertikaler Richtung nach oben schwenkt,
Aufliegen einer Bodenwandung (7) des Stauraumelements (2) und eines Auflagerahmens (24) bzw. der Bodenrahmenwandung des Standelements (3) auf einem Untergrund, so dass der Auflagerahmen (24) des Standelements (3) parallel zu einer Vorderwandung des Stauraumelements (2) angeordnet ist,
Fixieren der Tragestellung mittels einer ersten Arretiereinrichtung (38).

13. Verfahren gemäß Anspruch 12, umfassend die folgenden Schritte:
Anheben eines Klappelement (19) in vertikaler Richtung nach oben derart, dass ein Klappen des Klappelements (19) um eine Klappachse um 180° erfolgt, und
Drehen der Klapparme (20, 21) drehen um die Drehachse (31),
in etwa flächenbündiges Aufliegen der Klappelemente (19) auf einer Oberwandung (6)
und/oder
ein Fixieren des Klappelements (19) mittels einer entsprechenden Fixiereinrichtung erfolgt.

14. Verfahren gemäß einem der Ansprüche 9 bis 13,
**dadurch gekennzeichnet,**
**dass** das Verfahren mit einer Vorrichtung gemäß einem der Ansprüche 1 bis 8 ausgeführt wird.

## Claims

1. Portable camping kitchen, comprising
a storage element (2) which has a front (4) and a back wall (5), an upper (6) and a lower wall (7) and two side walls (8, 9), a stand element (3) which has a rectangular support frame (24) and two foot frames (25, 26), wherein the foot frames (25, 26) extend at two opposite sides of the support frame (24) transversely to a surface spanned by the support frame (24), and wherein the stand element (3) is connected to the storage element (2) in a manner to be pivotable about a pivot axis (28) which extends parallel to an edge formed between the back and the base wall (7) of the storage element (2) such that
in a carrying position, the foot frames (25, 26) are arranged substantially congruent on the side walls (8, 9) of the storage element (2), and in an operating position, the foot frames (25, 26) extend the side walls (8, 9) downwards in the vertical direction,
wherein a locking device (38, 39) is provided in order to secure the storage element (2) and the stand element (3) in their position relative to one another.

2. The camping kitchen according to claim 1,
**characterised in that**
the storage element (2) is formed to be cuboid.

3. The camping kitchen according to claim 1 or 2,
**characterised in that**
a first flap element (18) formed like a frame is provided, which is connected to the storage element (2) via two flap arms (20, 21) in a foldable manner, wherein a respective end of the flap arms (20, 21) is hingedly connected to the front (4) and to the back wall (5) in the region of the side wall (8, 9) and the flap element (18) is hingedly connected to the other ends of the pivot arms such that the flap element (18), in a carrying position, is arranged to be substantially congruent on the upper wall (6) of the storage element (2),
and wherein the flap element (18), in an operating position, extends the upper wall (6) to the side,
and/or
a second plate-shaped flap element (19) is provided, which is foldably connected to the storage element (2) via two flap arms (20, 21), wherein a respective end of the flap arms (20, 21) is hingedly connected to the front (4) and to the back wall (5) in the region of the side wall (8, 9) and the flap element (19) is hingedly connected to the other ends of the pivot arms such that the flap element (19), in a carrying position, is arranged to be substantially congruent on the upper wall (6) of the storage element (2) and wherein the flap element (19), in an operating position, extends the upper wall (6) to the side.

4. The camping kitchen according to any one of claims 1 to 3,
**characterised in that**
in the flap element (19) formed like a frame, in the operating position, a kitchen sink (22) is releasably attached, wherein the kitchen sink (22) can be arranged in the storage element (2) in a carrying position
and/or
in the storage element (2), a cooking element (13) is provided, which is arranged to be substantially flush with the upper wall (6) of the storage element (2)
and/or
in the operating position, a water tap (16) is releasably attached to the upper wall (6) of the storage element (2) adjacent to the kitchen sink (22), wherein the water tap (16), in a carrying position, can be arranged in the storage element (2) or on the upper wall (6)
and/or
the kitchen sink (22) is formed to be foldable.

5. The camping kitchen according to any one of claims 1 to 4,
**characterised in that**
the frames are formed from aluminium, steel, stainless steel, wood, carbon or plastic profiles
and/or
**in that** the walls are formed from aluminium, steel, stainless steel, wood, carbon or plastic plates.

6. The camping kitchen according to any one of claims 1 to 5,
**characterised in that**
the locking device (38, 39) preferably comprises a first (38) and a second (39) locking device.

7. The camping kitchen according to claim 6,
**characterised in that**
the first locking device (38) secures the stand element (3) and the storage element (2) in the carrying position relative to one another, wherein this first locking device (38) comprises two rotary bolts which are arranged approximately in the centre of a strut of the support frame (24) such that they are rotatable about rotation axes (31) standing perpendicularly on a front frame wall of the stand element (3), and the rotary bolts of the first locking device (38) secure the stand element (3) with regard to the storage element (2) in the carrying position such that the rotary bolts rest on the upper wall (6) of the storage element (2) or on the flap elements (19), respectively, and prevent outward pivoting of the stand element (3).

8. The camping kitchen according to claim 6 or 7,
**characterised in that**
the second locking device (39) secures the stand element (3) and the storage element (2) relative to one another in the operating position, wherein this second locking device (39) comprises two rotary bolts which are arranged on a respective strut of the foot frames (25, 26) such that they are rotatable about rotation axes (31) standing perpendicularly on an upper frame wall of the stand element (3), and the rotary bolts of the second locking device (39) secure the stand element (3) with regard to the storage element (2) in the operating position such that the base wall (7) of the storage element (2) rests on the rotary bolts and prevent inward pivoting of the stand element (3).

9. A method for transitioning a camping kitchen according to any one of claims 1-8 from a carrying position to an operating position and thus for outward pivoting of a stand element (3) from a storage element (2), comprising the following steps:
arranging the camping kitchen on a support frame (24) or the base frame wall of the stand element (3), respectively,
releasing a first locking device (38) between the stand element (3) and the storage element (2),
lifting the storage element (2) upwards in the vertical direction such that the stand element (3) pivots downwards about a pivot axis (28) in the vertical direction,
resting a support surface of the storage element (2) on a surface,
horizontally orienting the upper wall (6), and
securing the operating position by means of a second locking device (39).

10. The method according to claim 9,
**characterised in that** a setting of the stand feet is made such that the stand element (3) rests on a surface in a positionally stable manner.

11. The method according to claim 9,
comprising the following steps:
pivoting the flap element (19) to the outside in a lateral direction such that the flap element (19) is folded about a further flap axis about 180°, wherein the flap axis extends through a hinged connection of the flap arms (20, 21) to the flap element (19),
resting an edge of the flap element (19) opposite the edge connected to the flap arms (20, 21) in the region of a corresponding side wall (8, 9) of the upper wall (6), wherein the flap arms (20, 21) thereby rotate about a rotation axis (31),
supporting the flap element (19) in the vertical direction through the flap arms (20, 21) and the upper wall (6),
and/or
securing the flap element (19) in the horizontal direction is made by means of a corresponding securing device.

12. The method for transitioning a camping kitchen according to any one of claims 1-8 from an operating position to a carrying position and thus for inward pivoting a stand element (3) to the storage element (2), comprising the following steps:
arranging the camping kitchen on a support frame (24) or the base frame wall of the stand element (3), respectively,
releasing a second locking device (39) between the stand element (3) and the storage element (2),
lowering the storage element (2) downwards in the vertical direction such that the stand element (3) pivots upwards about a pivot axis (28) in the vertical direction,
resting a base wall (7) of the storage element (2) and a support frame (24) or the base frame wall of the stand element (3), respectively, on a surface such that the support frame (24) of the stand element (3) is arranged parallel to a front wall of the storage element (2),
securing the carrying position by means of a first locking device (38).

13. The method according to claim 12, comprising the following steps:
lifting a flap element (19) upwards in the vertical direction such that the flap element (19) is folded about a flap axis about 180°, and
rotating the flap arms (20, 21) rotate about the rotation axis (31),
approximately flush resting of the flap elements (19) on an upper wall (6)
and/or
securing the flap element (19) is made by means of a corresponding securing device.

14. The method according to any one of claims 9 to 13,
**characterised in that**
the method is executed with a device according to any one of claims 1 to 8.

## Revendications

1. Cuisine de camping portative, comprenant
un élément de rangement (2) qui présente une paroi avant (4) et une paroi arrière (5), une paroi supérieure (6) et une paroi inférieure (7) ainsi que deux parois latérales (8, 9), un élément de support (3) qui présente un cadre d'appui rectangulaire (24) et deux cadres de pied (25, 26), les cadres de pied (25, 26) s'étendant sur deux côtés opposés du cadre d'appui (24), transversalement à une surface tendue par le cadre d'appui (24), et l'élément de support (3) étant relié à l'élément de rangement (2) de manière à pouvoir pivoter autour d'un axe de rotation (28) qui s'étend parallèlement à un bord formée entre la paroi arrière et la paroi de fond (7) de l'élément de rangement (2), de telle sorte que
dans une position de support, les cadres de pied (25, 26) sont disposés essentiellement en coïncidence sur les parois latérales (8, 9) de l'élément de rangement (2), et dans une position de travail, les cadres de pied (25, 26) prolongent les parois latérales (8, 9) vers le bas dans le sens vertical,
un dispositif d'arrêt (38, 39) étant prévu pour fixer l'élément de rangement (2) et l'élément de support (3) dans leur position l'un par rapport à l'autre.

2. Cuisine de camping selon la revendication 1,
**caractérisée en ce que**
l'élément de rangement (2) est réalisé en forme de parallélépipède.

3. Cuisine de camping selon la revendication 1 ou 2,
**caractérisée en ce qu'**
un premier élément rabattable (18) réalisé en forme de cadre est prévu, qui est relié de manière rabattable à l'élément de rangement (2) par l'intermédiaire de deux bras rabattables (20, 21), une extrémité de chacun des bras rabattables (20, 21) étant reliée dans la zone de la paroi latérale (8, 9) de manière articulée à la paroi avant (4) et à la paroi arrière (5) et l'élément rabattable (18) est relié de manière articulée aux autres extrémités des bras pivotants de telle sorte que l'élément rabattable (18), dans une position de support, est disposé essentiellement en coïncidence sur la paroi supérieure (6) de l'élément de rangement (2) et l'élément rabattable (18), dans une position de travail, prolonge la paroi supérieure (6) vers le côté
et/ou
un deuxième élément rabattable (19) en forme de plaque est prévu, qui est relié de manière rabattable à l'élément de rangement (2) par l'intermédiaire de deux bras rabattables (20, 21), une extrémité de chacun des bras rabattables (20, 21) étant reliée de manière articulée à la paroi avant (4) et à la paroi arrière (5) dans la zone de la paroi latérale (8, 9) et l'élément rabattable (19) est relié de manière articulée aux autres extrémités des bras pivotants de telle sorte que l'élément rabattable (19) est disposé dans une position de support essentiellement en coïncidence sur la paroi supérieure (6) de l'élément de rangement (2), et l'élément rabattable (19), dans une position de travail, prolonge la paroi supérieure (6) vers le côté.

4. Cuisine de camping selon l'une quelconque des revendications 1 à 3,
**caractérisée en ce que**
un évier (22) peut être fixé de manière amovible dans l'élément rabattable (19) réalisé en forme de cadre dans la position de travail, l'évier (22) pouvant être disposé dans une position de support dans l'élément de rangement (2)
et/ou
un élément de cuisson (13) étant prévu dans l'élément de rangement (2), qui est disposé essentiellement à fleur de la paroi supérieure (6) de l'élément de rangement (2)
et/ou
dans la position de travail, un robinet d'eau (16) peut être fixé de manière amovible sur la paroi supérieure (6) de l'élément de rangement (2) adjacent à l'évier (22), le robinet d'eau (16) pouvant être disposé dans une position de support dans l'élément de rangement (2) ou sur la paroi supérieure (6)
et/ou
l'évier (22) est réalisé de manière à pouvoir être replié.

5. Cuisine de camping selon l'une quelconque des revendications 1 à 4,
**caractérisée en ce que**
les cadres sont réalisés en profilés d'aluminium, d'acier, d'acier inoxydable, de bois, de carbone ou de matière plastique
et/ou
que les parois sont réalisées en plaques d'aluminium, d'acier, d'acier inoxydable, de bois, de carbone ou de matière plastique.

6. Cuisine de camping selon l'une quelconque des revendications 1 à 5,
**caractérisée en ce que**
le dispositif d'arrêt (38, 39) comprend de préférence un premier (38) et un deuxième (39) dispositifs d'arrêt.

7. Cuisine de camping selon la revendication 6,
**caractérisée en ce que**
le premier dispositif d'arrêt (38) fixe l'élément de support (3) et l'élément de rangement (2) l'un par rapport à l'autre dans la position de support, ce premier dispositif d'arrêt (38) comprenant deux verrous rotatifs qui sont disposés à peu près au milieu sur une entretoise du cadre d'appui (24) de telle sorte qu'ils peuvent pivoter autour d'axes de rotation (31) perpendiculaires à une paroi de cadre avant de l'élément de support (3) et les verrous rotatifs du premier dispositif d'arrêt (38) fixent l'élément de support (3) par rapport à l'élément de rangement (2) dans la position de support de telle sorte que les verrous rotatifs reposent sur la paroi supérieure (6) de l'élément de rangement (2) ou sur les éléments rabattables (19) et empêchent un pivotement de l'élément de support (3).

8. Cuisine de camping selon la revendication 6 ou 7,
**caractérisée en ce que**
le deuxième dispositif d'arrêt (39) fixe l'élément de support (3) et l'élément de rangement (2) l'un par rapport à l'autre dans la position de travail, ce deuxième dispositif d'arrêt (39) comprenant deux verrous rotatifs qui sont disposés sur une entretoise respective des cadres de pied (25, 26) de telle sorte qu'ils peuvent pivoter autour d'axes de rotation (31) perpendiculaires à une paroi de cadre supérieur de l'élément de support (3) et les verrous rotatifs du deuxième dispositif d'arrêt (39) fixent l'élément de support (3) par rapport à l'élément de rangement (2) dans la position de travail de telle sorte que la paroi de fond (7) de l'élément de rangement (2) repose sur les verrous rotatifs et empêche un pivotement de l'élément de support (3).

9. Procédé de transfert d'une cuisine de camping selon l'une quelconque des revendications 1 à 8, d'une position de support à une position de travail et donc pour faire pivoter un élément de support (3) d'un élément de rangement (2), comprenant les étapes suivantes :
Disposition de la cuisine de camping sur un cadre d'appui (24) ou sur la paroi du cadre de fond de l'élément de support (3),
desserrage d'un premier dispositif d'arrêt (38) entre l'élément de support (3) et l'élément de rangement (2),
Soulèvement de l'élément de rangement (2) dans le sens vertical vers le haut de telle sorte que l'élément de support (3) pivote autour d'un axe de rotation (28) dans le sens vertical vers le bas,
Appui sur une surface d'appui de l'élément de rangement (2) sur un support, alignement horizontalement de la paroi supérieure (6), et
Fixation de la position de travail au moyen d'un deuxième dispositif d'arrêt (39).

10. Procédé selon la revendication 9,
**caractérisé en ce qu'**
un réglage des pieds de support est effectué de telle sorte que l'élément de support (3) repose de manière stable sur un support.

11. Procédé selon la revendication 9, comprenant les étapes suivantes :
Pivotement de l'élément rabattable (19) en direction latérale vers l'extérieur de telle sorte qu'un rabattement de l'élément rabattable (19) s'effectue autour d'un autre axe de rabattement de 180°, l'axe de rabattement s'étendant à travers une liaison articulée des bras rabattables (20, 21) avec l'élément rabattable (19),
Appui sur un bord de l'élément rabattable (19) opposé au bord relié aux bras rabattables (20, 21) dans la zone d'une paroi latérale correspondante (8, 9) de la paroi supérieure (6), les bras rabattables (20, 21) pivotant alors autour d'un axe de rotation (31),
Support de l'élément rabattable (19) dans le sens vertical par les bras rabattables (20, 21) et la paroi supérieure (6)
et/ou
Fixation l'élément rabattable (19) dans la direction horizontale au moyen d'un dispositif de fixation correspondant.

12. Procédé de transfert d'une cuisine de camping selon l'une quelconque des revendications 1 à 8 d'une position de travail à une position de support et pour faire ainsi pivoter un élément de support (3) vers l'élément de rangement (2), comprenant les étapes suivantes :
Disposition de la cuisine de camping sur un cadre d'appui (24) ou sur la paroi du cadre de fond de l'élément de support (3),
Desserrage d'un deuxième dispositif d' arrêt (39) entre l'élément de support (3) et l'élément de rangement (2),
Abaissement de l'élément de rangement (2) dans le sens vertical vers le bas de telle sorte que l'élément de support (3) pivote autour d'un axe de rotation (28) dans le sens vertical vers le haut,
Appui sur une paroi de fond (7) de l'élément de rangement (2) et d'un cadre d'appui (24) ou de la paroi du cadre de fond de l'élément de support (3) sur un support, de sorte que le cadre d'appui (24) de l'élément de support (3) est disposé parallèlement à une paroi avant de l'élément de rangement (2),
Fixation de la position de support au moyen d'un premier dispositif de d'arrêt (38).

13. Procédé selon la revendication 12, comprenant les étapes suivantes :
Soulèvement d'un élément de rabattable (19) dans le sens vertical vers le haut de telle sorte qu'il se produise un rabattement de l'élément de rabattage (19) autour d'un axe de rabattement de 180°, et pivotement des bras rabattables (20, 21) autour de l'axe de rotation (31), appui à peu près à fleur des éléments rabattables (19) sur une paroi supérieure (6)
et/ou
Fixation de l'élément rabattable (19) moyen d'un dispositif de fixation correspondant.

14. Procédé selon l'une quelconque des revendications 9 à 13,
**caractérisé en ce que**
le procédé est mis en oeuvre avec un dispositif selon l'une quelconque des revendications 1 à 8.
